# EUROPÄISCHE PATENTSCHRIFT

(11) **EP 1 363 387 B1**
(45) Veröffentlichungstag und Bekanntmachung des Hinweises auf die Patenterteilung: **29.08.2012**
(21) Anmeldenummer: 03011205.6
(22) Anmeldetag: 16.05.2003
(51) Int. Cl.: H02M 7/06

(54) **Schaltungsanordnung für einen Gleichspannungszwischenkreis**
Circuit arrangement for a DC link
Dispositif de circuit pour un circuit intermediaire courant continu

(30) Priorität: 17.05.2002 DE 10221933
(43) Veröffentlichungstag der Anmeldung: 19.11.2003
(73) Patentinhaber: Lenze Automation GmbH, 31855 Aerzen (DE)
(72) Erfinder: Borcherding, Holger, Dr., 31840 Hessisch Oldendorf (DE); Tieste, Karl-Dieter, 30169 Hannover (DE); Jäckle, Benno, 3908 Lömmenschwil (CH)
(74) Vertreter: Schober, Mirko

(56) Entgegenhaltungen:
- DE-A- 4 103 108
- DE-U1- 8 816 268
- JP-A- 1 308 170
- JP-A- 4 183 276
- SU-A- 599 323
- PATENT ABSTRACTS OF JAPAN Bd. 015, Nr. 277 (E-1089), 15. Juli 1991 (1991-07-15) & JP 03 093473 A (FUJI ELECTRIC), 18. April 1991 (1991-04-18)
- PATENT ABSTRACTS OF JAPAN Bd. 006, Nr. 226, 11. November 1982 (1982-11-11) & JP 57 129168 A (TOSHIBA CORP.), 11. August 1982 (1982-08-11)
- PATENT ABSTRACTS OF JAPAN Bd. 2000, Nr. 25, 12. April 2001 (2001-04-12) & JP 2001 238459 A (HITACHI), 31. August 2001 (2001-08-31)

## Beschreibung

Die Erfindung bezieht sich auf eine Schaltungsanordnung für einen von einer netzbetriebenen Gleichrichterbrücke versorgten Gleichspannungszwischenkreis der im Gattungsbegriff des Patentanspruchs 1 näher bezeichneten Art.

In der Regel wird ein solcher Gleichspannungszwischenkreis aus einem dreiphasigen Wechselstromnetz mittels einer entsprechenden Gleichrichterbrücke versorgt, wobei zur Glättung der Welligkeit im Gleichspannungskreis ein oder mehrere Kondensatoren vorgesehen sind. Um den Einschaltstrom der Gleichrichterschaltung zu vermindern, werden die Kondensatoren im Gleichspannungszwischenkreis vorgeladen, womit die Bauteilbeanspruchung verringert und das Ansprechen von Sicherungselementen verhindert wird.

Bei einer gattungsgemäßen Schaltungsanordnung wird über die hier wechselspannsseitige Ladeschaltung der zumindest eine Kondensator im Gleichspannungszwischenkreis mittels komplexer Widerstände entsprechend aus dem Wechselstromnetz geladen, wobei den entsprechenden Impedanzen, bei denen es sich sowohl um Kondensatoren als auch um Widerstände handeln kann, Schütze oder Relais parallel geschaltet sind. Bei einem dreiphasigen Wechselstromnetz sind drei Schütze und zwei Impedanzen erforderlich, im dritten Netzzweig kann grundsätzlich die Impedanz entfallen. Die Impedanzen bestimmen die Höhe des Einschaltstromes der Schaltungsanordnung, über den die Aufladung des Kondensators im Gleichspannungszwischenkreis erfolgt. Sobald sich im Gleichschaltungszwischenkreis eine ausreichende Spannung aufgebaut hat, werden durch Schließung der Schütze die Impedanzen überbrückt.

Bei einer anderen Ladeschaltung wird die Vorladung des Kondensators im Gleichspannungszwischenkreis auf der Gleichspannungsseite vorgenommen. Hierzu ist in einem der Gleichspannungszweige ein Widerstand mit einem parallel liegenden Relais angeordnet, welches den Widerstand überbrückt, sobald der Kondensator im Gleichspannungszwischenkreis ausreichend aufgeladen ist.

Die Problematik der vorstehend beschriebenen Ladeschaltungen besteht darin, daß man zur Dimensionierung der Impedanzen die Gesamtkapazität des Gleichspannungszwischenkreises kennen muß, um danach zum Zwecke einer ausreichenden Strombegrenzung die Impedanzen zu dimensionieren. Aufgrund der Verlustwärme in den Widerständen ist die Wiederholfrequenz des Aufladevorganges für den Zwischenkreiskondensator begrenzt. Immerhin kann durch die genannten Ladeschaltungen der bauliche Aufwand in Grenzen gehalten werden, der dann wesentlich höher ist, wenn alternativ zu den Ladeschaltungen ein gesteuerter, netzgeführter Gleichrichter eingesetzt wird, um den Gleichspannungszwischenkreis aufzuladen.

In der JP 01 308170 A wird eine Schaltung offenbart, in der die Funktion der Ladegegenstände durch in die Gleichrichterbrücke integrierte Thyristoren wahrgenommen wird. Dabei werden drei Dioden durch drei Thyristoren ersetzt, was zwar prinzipiell einen verlustarmen Betrieb ermöglicht, jedoch eine sehr aufwändige Lösung darstellt.

Die DE 88 16 268 U1 offenbart eine Schaltvorrichtung, bei der ebenfalls Thyristoren und Widerstände mit einem Zwischenkreiskondensator verschaltet sind. Die Thyristoren und Widerstände dienen jedoch nicht der Ladestrombegrenzung, vielmehr soll die Spannung im Zwischenkreis begrenzt werden, indem der Zwischenkreiskondensator durch das Zünden der Thyristoren über die Widerstände entladen wird, wobei die Widerstände der Entladestrombegrenzung dienen.

Schließlich offenbart die JP 04 183276 A eine Schaltung, in der ebenfalls der Ladestrom eines Zwischenkreiskondensators durch Thyristoren beschränkt werden kann. Allerdings wird bei dieser Schaltung ein dreiphasiger Schalter zwischen Netzspannung und Gleichrichterbrücke benötigt, der zur Realisierung des Ladevorgangs durch einen weiteren Thyristor überbrückt werden muss. Somit ergibt sich hier ebenfalls eine teure und aufwändige Schaltung.

Der Erfindung liegt die Aufgabe zugrunde, eine Schaltungsanordnung der gattungsgemäßen Art zu schaffen, welche den Einsatz eines ungesteuerten Gleichrichters vorsieht, wobei die erforderliche Ladeschaltung verlustarm arbeitet und entsprechend eine hohe Wiederholfrequenz ermöglicht.

Diese Aufgabe wird durch eine Schaltungsanordnung nach Patentanspruch 1 gelöst.

Für die Erfindung ist wesentlich, daß sich die Strombelastung des Thyristors durch passende Wahl des Zündwinkels in einfacher Weise begrenzen läßt, wodurch die Verluste der Aufladeschaltung gering sind. Deshalb kann mit der erfindungsgemäßen Schaltungsanordnung der Aufladevorgang häufig wiederholt werden. Zudem ist es lediglich erforderlich, den Thyristor nur für den Aufladevorgang zu dimensionieren. Deshalb fällt die Belastung und die davon abhängende Baugröße des Thyristors im Vergleich zur Diodenbrücke der Gleichrichterschaltung gering aus.

Vorteilhafte Ausgestaltungsmerkmale der Erfindung ergeben sich aus den Unteransprüchen.

Die Erfindung wird nachfolgend anhand der Zeichnung an zwei Ausführungsbeispielen noch näher erläutert. Dabei zeigen:
- Fig. 1: eine Schaltungsanordnung zur Versorgung eines Gleichspannungszwischenkreises aus einem Wechselstromnetz mit einer Ladeschaltung und
- Fig. 2: eine grundsätzlich der Fig. 1 entsprechende Schaltungsanordnung jedoch mit zusätzlichen Schutzfunktionen.

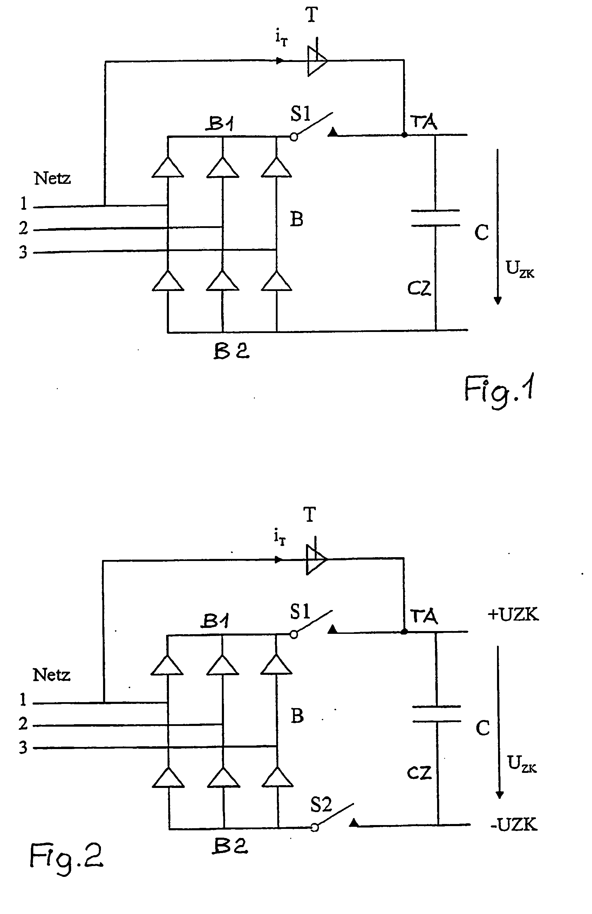

Im einzelnen ist in Fig. 1 schematisch eine dreiphasige Gleichrichterbrücke B wiedergegeben, die entsprechend aus einem Wechselstromnetz mit den drei Phasen 1, 2 und 3 gespeist wird. Die Gleichrichterbrücke B hat zwei Gleichspannungszweige B1 und B2, die einen Gleichspannungszwischenkreis versorgen, über den insbesondere ein mittels einer Wechselrichterschaltung frequenzgesteuerter Drehstrommotor gespeist wird. Der Gleichspannungszwischenkreis weist einen Kondensatorzweig CZ auf, der zumindest einen Kondensator C umfaßt. Der Kondensator C steht hier stellvertretend für die Gesamtkapazität des Gleichspannungszwischenkreises. Ab dem Einschaltaugenblick wird der Kondensator C mittels Strompulsen, die mit zunehmender Kondensatorspannung schwächer werden, geladen, und zwar solange, bis am Kondensator C die Gesamtspannung U_{ZK} des Gleichspannungszwischenkreises abfällt.

Die Netzphase 1 und der Kondensatorkreis CZ sind über einen Thyristor T miteinander verbunden, wodurch sich eine Reihenschaltung des Thyristors T, des Kondensators C und der in gleicher Durchlaßrichtung liegenden Dioden der Gleichrichterbrücke B in deren Zweig B2 zu den weiteren Netzphasen 2 und 3 ergibt. Zwischen dem Anschlußknoten TA für den Thyristor T am Kondensatorzweig CZ und dem zu dem betreffenden Gleichspannungszweig zugehörenden Brückenzweig B1 ist ein Relais S1 angeordnet, welches im Einschaltzeitpunkt der Schaltungsanordnung offen ist. Entsprechend ist lediglich die im wesentlichen aus dem Thyristor T bestehende Ladeschaltung auf den Kondensatorzweig CZ im Einschaltzeitpunkt geschaltet.

Beim Einschalten wird zunächst der Thyristor T synchron mit der Frequenz des Wechselspannungsnetzes gezündet, wobei von einer der Phasenspannungen, z.B. von der Spannung zwischen den beiden Phasen 1 und 3 ausgegangen wird. Bezogen auf den Nulldurchgang dieser Wechselspannung wird mit einem elektrischen Zündwinkel von 90 Grad begonnen, der während mehrerer Netzperioden kontinuierlich bis auf etwa 0 Grad verringert wird. Durch die durch den Thyristor T und den Kondensator C fließenden Ladestrompulse wird der Kondensator C aufgeladen, bis im Gleichspannungszwischenkreis die Spannung U_{ZK} erreicht ist. Danach wird das Relais S1 geschlossen, womit der Ladevorgang beendet ist. Da nunmehr der Thyristor T nicht mehr zur Stromführung beitragen muß, werden seine Zündimpulse gesperrt.

Fig. 2 zeigt eine Schaltungsanordnung, die im Vergleich zu der von Fig. 1 um ein weiteres Relais S2 im zweiten Gleichspannungszwischenkreis, der dem Brückenzweig B2 zugeordnet ist, ergänzt ist. Beim Ladevorgang wird das Relais S2 synchron mit dem Relais S1 gesteuert. Mit dieser Schaltung können vor der Aufladung der Zwischenkreiskapazität zwei verschiedene Fehlerfälle ermittelt werden:

Bei einem geerdeten Netz kann am Ausgang des Gleichspannungszwischenkreises ein Erdschluß erkannt werden. Schematisch sind als Gleichspannungsausgang hier die Klemmen +U_{ZK} oder -U_{ZK} anzusehen, an denen der vom Gleichspannungszwischenkreis versorgte Gleichspannungsverbraucher angeschlossen ist. Läßt man die Relais S1 und S2 offen und steuert den Thyristor T in der Weise an, wie es beim Ladevorgang vorgenommen wird, dann liegt dann ein Erdschluß nicht vor, wenn weder ein Thyristorstrom i_{T} noch eine Gleichspannung U_{ZK} am Zwischenkreis-Kondensator C meßbar ist. Liegt ein Erdschluß an dem Anschluß +U_{ZK} vor, wird bei Verringerung des Zündwinkels über den Thyristor T und die betreffende Fehlerstelle ein Strom i_{T} > 0 fließen, der somit einen Fehler signalisiert. Liegt ein Erdschluß am Anschluß - U_{ZK} vor, wird bei Verringerung des Zündwinkels des Thyristors de geladen. Damit ist ein Gleichspannung U_{ZK} > 0 im Gleichspannungszwischenkreis meßbar, wodurch auch hierder betreffende Fehler erfaßbar ist.

Des weiteren kann ein Kurzschluß am Gleichspannungsausgang des Gleichspannungszwischenkreises festgestellt werden. Ein solcher Kurzschluß kann entweder im Gleichspannungszwischenkreis selbst liegen oder bei dem daran angeschlossenen Gleichspannungsverbraucher auftreten. Es bleibt hierbei das Relais S1 geöffnet und es wird das Relais S2 geschlossen, und danach wird entsprechend dem Ladevorgang der Thyristor T gezündet. Liegt ein Kurzschluß vor, wird bei Verringerung des Zündwinkels über den Thyristor T und die Fehlerstelle ein Strom i_{T} > 0 fließen, so daß auf diese Weise ein durch einen Kurzschluß bedingter Fehler erkannt werden kann.

## Patentansprüche

1. Schaltungsanordnung für einen von einer netzbetriebenen Gleichrichterbrücke (B) versorgten Gleichspannungszwischenkreis, insbesondere für einen Frequenzumrichter, mit zumindest einem Zwischenkreis-Kondensator (C), der zwecks Vorladen vor dem Zuschalten der Gleichrichterbrücke (B) mittels einer Ladeschaltung mit dem Netz verbindbar ist, wobei die Ladeschaltung genau einen Thyristor (T) aufweist, der in Reihe mit dem Kondensator (C) sowie einem in gleicher Durchlassrichtung liegenden Zweig (B2) der Gleichrichterbrücke (B) am Wechselspannungsnetz (1, 2, 3) liegt, wobei sich eine Reihenschaltung von einer ersten Netzphase (1) über den Thyristor (T), den Kondensator (C) und die in gleicher Durchlassrichtung liegenden Dioden der Gleichrichterbrücke (B) in deren Zweig (B2) zu den weiteren Netzphasen (2, 3) ergibt, wobei der Thyristor (T) so ausgelegt ist, dass er synchron mit der Netzfrequenz für die Dauer des Ladevorgangs gezündet wird, wobei der Thyristor (T) weiter so ausgelegt ist, dass der Zündwinkel bezogen auf den Nulldurchgang der Netzspannung während mehrerer Netzperioden von einem Ausgangswert auf nahezu 0 Grad verringert wird, und dass die Ladeschaltung zumindest ein erstes Relais (S1) aufweist, das in einem der beiden Gleichspannungszweige zwischen dem zugeordneten Zweig (B1) der Gleichrichterbrücke (B) und dem kondensatorseitigen Thyristor-Anschluss (TA) angeordnet ist.

2. Schaltungsanordnung nach Anspruch 1,
**dadurch gekennzeichnet,**
**dass** der Ausgangswert des Thyristor-Zündwinkels 90 Grad beträgt.

3. Schaltungsanordnung nach Anspruch 1,
**dadurch gekennzeichnet,**
**dass** im zweiten Gleichspannungszweig zwischen dem zugeordneten Zweig (B2) der Gleichrichterbrücke (B) und dem Kondensatorzweig (CZ) ebenfalls ein Relais (S2) angeordnet ist, welches beim Ladevorgang synchron mit dem Relais (S1) im ersten Gleichspannungszweig gesteuert ist.

4. Schaltungsanordnung nach Anspruch 3,
**dadurch gekennzeichnet,**
**dass** zur Prüfung eines Erdschlusses am Ausgang des Gleichspannungszwischenkreises bei einem geerdeten Netz bei geöffneten beiden Relais (S1, S2) der Thyristor (T) entsprechend dem Ladevorgang gezündet und ein im Erdschlussfall über den Thyristor (T) fließender Strom (i_{T}) erfaßt wird.

5. Schaltungsanordnung nach Anspruch 3,
**dadurch gekennzeichnet,**
**dass** zur Prüfung eines Kurzschlusses im Gleichspannungszwischenkreis oder im daran angeschlossenen Verbraucher bei geöffnetem zweitem Relais (S2) der Thyristor (T) entsprechend dem Ladevorgang gezündet und ein im Kurzschlussfall über den Thyristor (T) fließender Strom (i_{T}) erfasst wird.

## Claims

1. Circuit arrangement for a DC voltage intermediate circuit supplied by a network-operated rectifier bridge (B), in particular for a frequency inverter, with at least one intermediate circuit capacitor (C) which can be connected to the network for the purpose of precharging before connection of the rectifier bridge (B) by means of a charging circuit, wherein the charging circuit comprises precisely one thyristor (T) which lies in series with the capacitor (C) and a branch (B2) of the rectifier bridge (B) lying in the same forward bias direction on the AC voltage network (1, 2, 3), wherein a series circuit results from a first network phase (1) via the thyristor (T), the capacitor (C) and the diodes of the rectifier bridge (B), lying in the same forward bias direction, in the branch (B2) thereof to the further network phases (2, 3), wherein the thyristor (T) is designed so that it is ignited synchronously with the network frequency for the duration of the charging process, wherein the thyristor (T) is furthermore designed so that the ignition angle in relation to the zero crossing of the network voltage is reduced during several network periods from a starting value to almost 0 degrees and the charging circuit comprises at least one first relay (S1) which is arranged in one of the two DC voltage branches between the assigned branch (B1) of the rectifier bridge (B) and the capacitor-side thyristor connection (TA).

2. Circuit arrangement according to claim 1, **characterised in that**
the starting value of the thyristor ignition angle is 90 degrees.

3. Circuit arrangement according to claim 1,
**characterised in that**
a relay (S2) is also arranged in the second DC voltage branch between the assigned branch (B2) of the rectifier bridge (B) and the capacitor branch (CZ), said relay (S2) being controlled during the charging process synchronously with the relay (S1) in the first DC voltage branch.

4. Circuit arrangement according to claim 3,
**characterised in that**
in order to test an earth leakage at the output of the DC voltage intermediate circuit in an earthed network with both relays open (S1, S2) the thyristor (T) is ignited corresponding to the charging process and a current (i_{T}) flowing in case of earth leakage via the thyristor (T) is detected.

5. Circuit arrangement according to claim 3,
**characterised in that**
in order to test a short circuit in the DC voltage intermediate circuit or in the consumer connected thereto with the second relay (S2) open the thyristor (T) is ignited corresponding to the charging process and a current (i_{T}) flowing in case of short circuit via the thyristor (T) is detected.

## Revendications

1. Agencement de circuit pour un circuit intermédiaire à courant continu, alimenté par un pont redresseur de courant (B) fonctionnant sur réseau, en particulier pour un convertisseur de fréquence, avec au moins un condensateur (C) de circuit intermédiaire qui, aux fins d'être chargé avant la mise en service du pont redresseur de courant (B), peut être relié au réseau au moyen d'un circuit de charge, le circuit de charge présentant exactement un thyristor (T), qui est connecté au réseau de tension alternative (1, 2, 3), en série avec le condensateur (C), ainsi qu'avec une branche (B2) du pont redresseur de courant (B) de même sens direct, sachant qu'il en résulte un branchement en série d'une première phase (1) du réseau avec les autres phases (2, 3) du réseau, par l'intermédiaire du thyristor (T), du condensateur (C) et des diodes de même sens direct du pont redresseur de courant (B), le thyristor (T) étant conçu de sorte qu'il s'allume en synchronisme avec la fréquence du réseau pour la durée du processus de charge, sachant que le thyristor (T) est de plus conçu de sorte que l'angle d'allumage par rapport au passage par zéro de la tension du réseau se réduise d'une valeur de sortie à presque 0 degré sur plusieurs périodes du réseau, et que le circuit de charge présente au moins un premier relais (S1), qui est disposé dans l'une des deux branches en tension continue, entre la branche associée (B1) du pont redresseur de courant (B) et le raccordement du thyristor (TA) côte condensateur.

2. Agencement de circuit selon la revendication 1, **caractérisé en ce que** la valeur de sortie de l'angle d'allumage du thyristor est de 90°.

3. Agencement de circuit selon la revendication 1, **caractérisé en ce que**, dans la deuxième branche en tension continue, entre la branche associée (B2) du pont redresseur de courant (B) et la branche du condensateur (CZ), est également disposé un relais (S2) qui, lors du processus de charge, est commandé en synchronisme avec le relais (S1) dans la première branche en tension continue.

4. Agencement de circuit selon la revendication 3, **caractérisé en ce que**, pour tester un défaut de terre à la sortie du circuit intermédiaire de courant continu, en cas de réseau mis à la terre, les deux relais (S1, S2) étant ouverts, le thyristor (T) est allumé conformément au processus de charge, et un courant (i_{T}) passant par le thyristor (T) en cas de défaut de terre, est détecté

5. Agencement de circuit selon la revendication 3, **caractérisé en ce que**, pour tester un court-circuit dans le circuit intermédiaire de courant continu ou dans le consommateur y raccordé, lorsque le deuxième relais (S2) est ouvert, le thyristor (T) est allumé conformément au processus de charge et un courant (i_{T}) passant par le thyristor (T) en cas de court-circuit, est détecté.
